# EUROPÄISCHE PATENTANMELDUNG

(11) **EP 3 232 550 A1**
(43) Veröffentlichungstag der Anmeldung: **18.10.2017**
(21) Anmeldenummer: 16164779.7
(22) Anmeldetag: 12.04.2016
(51) Int. Cl.: H02K 41/03, H02K 1/27

(54) **SEKUNDÄRTEIL EINES LINEARMOTORS**

(71) Anmelder: ROBERT BOSCH GMBH, 70442 Stuttgart (DE)
(72) Erfinder: Cernivec, Gregor, 1218 Komenda (SI); Hierl, Josef, 94151 Mauth (DE); Lisjak, Rado, 1107 Ljubljana Siska (SI)
(74) Vertreter: Thürer, Andreas

(57) **Zusammenfassung**

The invention relates to a secondary part (10) of a linear motor with a carrier and a permanent magnet arranged thereon, wherein the carrier is ferromagnetic, so that a magnetic force acts between the carrier and the permanent magnet arranged thereon, wherein the carrier and the permanent magnet arranged thereon are embodied in such a manner that the magnetic force is at least greater than the gravitational force on the permanent magnet, wherein the carrier and the permanent magnet arranged thereon are embodied in such a manner that a movement of the permanent magnet is restricted in at least one direction perpendicular to the main direction of the magnetic force by form fit.

## Beschreibung

The present invention relates to a secondary part of a linear motor, a method for manufacture of the same and a linear motor with such a secondary part.

### Prior art

The invention is disposed within the field of linear motors, especially linear motors with fixed secondary part. Such linear motors are used as drives in numerous fields of technology, for example, in machine tools, processing machines, such as automatic drilling, milling, turning, pick-and-place or bonding machines, through to vehicle drives in magnetic-levitation trains.

In general, a linear motor comprises a generally fixed secondary part, which, in the case of a synchronous linear motor, comprises a number of magnetic elements (permanent magnets) lined up with one another and forms a movement track for a primary part (rotor) with coils movable relative to the former. The coils of the primary part are supplied with current and interact with the magnets of the secondary part, thereby causing a translatory movement.

The attachment of the magnetic elements to the carrier of the secondary part is conventionally provided by means of a glued connection, for example, with multi-component adhesives. However, the gluing process requires defined and constant parameters throughout the entire gluing process. These include a certain roughness and absolute cleanliness of the surfaces to be glued, and the observance of the method prescribed in each case, both for the application of the adhesive and also for hardening. Furthermore, alongside cleanliness, the relative humidity in the surrounding atmosphere also has a significant influence on the quality of the glue connection. It is often impossible to guarantee a constant quality of glue connections, because a constant maintenance of all parameters during manufacture cannot always be ensured. The resilience or respectively durability of the glue connection is further reduced if the surface of the glued faces is subjected to a galvanic or chemical treatment in order to provide corrosion protection. Furthermore, the gluing process presents a bottleneck in the production process, because subsequent processing steps cannot be performed during the gluing, setting and hardening of the adhesive.

It is therefore desirable to simplify the attachment of the permanent magnets to the carrier.

### Disclosure of the invention

According to the invention, a secondary part of a linear motor, a method for manufacture of the same and a linear motor with such a secondary part with the features of the independent claims are proposed. Advantageous further developments form the subject matter of the dependent claims and of the subsequent description.

The invention proposes attaching the permanent magnets to the carrier of the secondary part not by means of a glued connection but by means of their intrinsic magnetic force. In particular, no material-fit connection is present between permanent magnets and carrier. In particular, also no form-fit connection is present between permanent magnets and carrier in the main direction of the magnetic force (perpendicular to the main plane of extension of the carrier), that is, a detachment of the magnets is not prevented by form-fit. However, a slipping of the permanent magnets in the main plane of extension of the carrier is prevented by means of a form fit, that is, a movement in the main plane of extension (perpendicular to the main direction of the magnetic force) is restricted or respectively, as far as technically possible (on the basis of tolerances, play etc.) entirely prevented. By preference, the carrier provides form-fit elements for this purpose. These form-fit elements can be arranged in such a manner that the permanent magnets are arranged adapted to the respective process, for example, spaced in a uniform manner from one another (with a polar spacing distance), thereby guaranteeing a constant, defined and high-quality embodiment of the secondary part.

The invention proposes a solution for the attachment of permanent magnets to the carrier which is achieved very simply and without additional means, such as adhesives, welding or soldering processes, screw connection and so on.

The fixed attachment of permanent magnets to the carrier of the secondary part via the intrinsic magnetic force and additional form-fit in the plane of the carrier is particularly advantageous, because the permanent magnets suffer no damage from mechanical processes resulting from an attachment of a magnet to a carrier, for example, by drilling, screwing or riveting.

Furthermore, a magnet-gluing process and accordingly a costly gluing device are dispensed with. An effort-intensive and cost-intensive implementation of safety guidelines and environmental guidelines for the handling of outgassing adhesives, with which an extraction of gases formed is often absolutely essential, is also dispensed with. In the case of the method for attachment of magnets through magnetic force, parameters such as air temperature and/or relative humidity are not relevant to the quality of attachment. By contrast with gluing methods, the roughness of the carrier also has no influence on the attachment method, and any potential sandblasting or other processes which influence the roughness are therefore unnecessary. On the contrary, the attachment of a magnet by magnetic force is largely free from influence of the surface properties of the carrier, such as a surface contaminated, for example, with dirt or grease, or an applied corrosion protection. In particular, the corrosion protection (chemical nickel coating) used with gluing processes can be replaced with the superior and more cost-favourable corrosion protection of chemical zinc coating. The operational processes following the magnetic attachment can be implemented without time delay caused by drying processes required in the case of gluing, thereby achieving a more cost-favourable operational process. In other words, a mechanical attachment of magnets to the carrier through magnetic force can be implemented more rapidly and more cost favourably and is more suitable for mass production. The height of the secondary part is further reduced by the absence of the adhesive.

By preference, the linear motor is embodied as an iron-free motor, that is, the coils of the primary part are not wound around a ferromagnetic core (a so-called iron core). As a result, the primary part cannot generate such large magnetic forces which can lift or respectively detach the permanent magnets from the carrier. Such preferred iron-free motors are advantageously used in x-y-z manipulators, warehouse-shelving systems, measuring tables, automatic pick-and-place machines (for example, for printed-circuit boards or respectively SMD mounting), which also forms the subject matter of the invention.

In other words, the carrier and the permanent magnet arranged thereon are embodied in such a manner that the magnetic force between the carrier and the permanent magnet is greater than the sum of the gravitational force on the permanent magnet and the magnetic force between the primary part and the permanent magnet.

By preference, the carrier is magnetically soft with a magnetic coercivity of less than 1000 A/m. This allows the side-by-side arrangement of permanent magnets with alternating poles (N/S/N/S/N/...) facing towards the carrier.

By preference, the carrier provides a relative permeability ᵣ of at least 50 or at least 250, preferably at least 1000, by greater preference at least 10,000. A sufficiently large magnetic force acts between (magnetically hard) permanent magnets and such a carrier to hold the permanent magnets on the carrier under normal operating conditions or respectively subject to the conditions of conventional customer-specifications.

According to one embodiment, the permanent magnets provide form-fit elements cooperating with form-fit elements of the carrier. This can be, for example, a tongue-and-groove cooperation or pin-borehole cooperation. However, by preference, the permanent magnets themselves do not provide any form-fit elements, but cooperate at their surfaces with the form-fit elements of the carrier. Accordingly, undamaged or respectively un-processed permanent magnets can be used, which simplifies manufacture.

By preference, the form-fit elements can be detached or respectively removed from the carrier in a non-destructive manner. This represents a particularly simple and variable type of manufacture. Alternatively, they can also be connected to the carrier in a non-destructively detachable manner. This presents a robust solution.

By preference, the form-fit elements are arranged in boreholes of the carrier. This presents a particularly simple but still precise type of attachment.

By preference, the form-fit elements are connected to the carrier by means of at least one connection, which is selected from a plug connection, a clip-connection, a screw connection, a riveted connection, a glued connection, a welded connection and a soldered connection. By preference, the form-fit elements are embodied in one piece with the carrier, for example, as milled edges. In this manner, the form-fit elements can be provided even during the manufacture of the carrier. This simplifies the manufacturing process.

By preference, the permanent magnets comprise ferromagnetic metals such as iron, cobalt, nickel and/or rare-earths and/or their alloys.

The use of the invention offers special advantages in different fields of technology, for example, in the case of machine tools, processing machines such as automatic drilling, milling, turning, pick-and-place or bonding machines, through to vehicle drives in magnetic-levitation trains etc.

Further advantages and embodiments of the invention are specified in the description and the associated drawings.

It is understood that the features described above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

Fig. 1 shows a first preferred embodiment of a secondary part according to the invention from different perspectives.
Fig. 2 shows a second preferred embodiment of a secondary part according to the invention from different perspectives.
Fig. 3 shows a third preferred embodiment of a secondary part according to the invention from different perspectives.
Fig. 4 shows a preferred embodiment of a secondary part with two fitted carriers.
Fig. 5 shows two linear motors according to the invention arranged in x-y direction.

### Detailed description of drawings

The Figs. show numerous different carriers and form-fit elements, each of which represents an advantageous further development of the invention in itself and independently of other possibly illustrated elements. This means, in particular, that every form-fit element illustrated within the scope of the invention, can be combined with every other form-fit element and every arbitrary carrier.

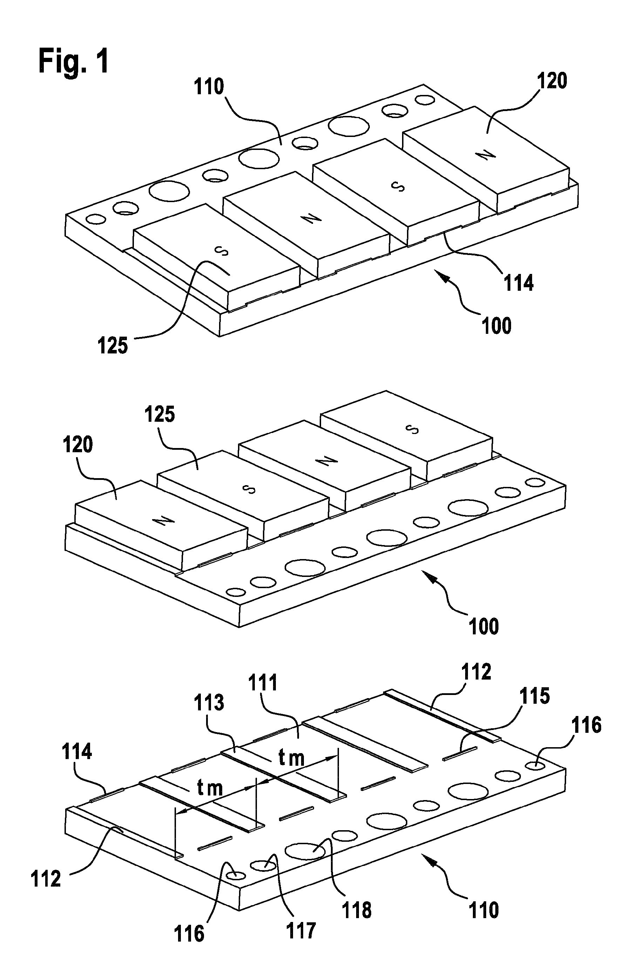

At the top and in the centre of Fig. 1, a secondary-part element 100 is illustrated in perspective from two different directions. The secondary-part element 100 comprises a carrier 110 and a number of permanent-magnet elements 120, 125.

In Fig. 1, at the bottom, a preferred embodiment of a carrier 110 is illustrated. The carrier 110 is embodied as a plate made from a magnetically soft material, such as an FeNi alloy. The plate 110 comprises a flat surface 111 with different raised portions 112, 113, 114 and 115 as form-fit elements.

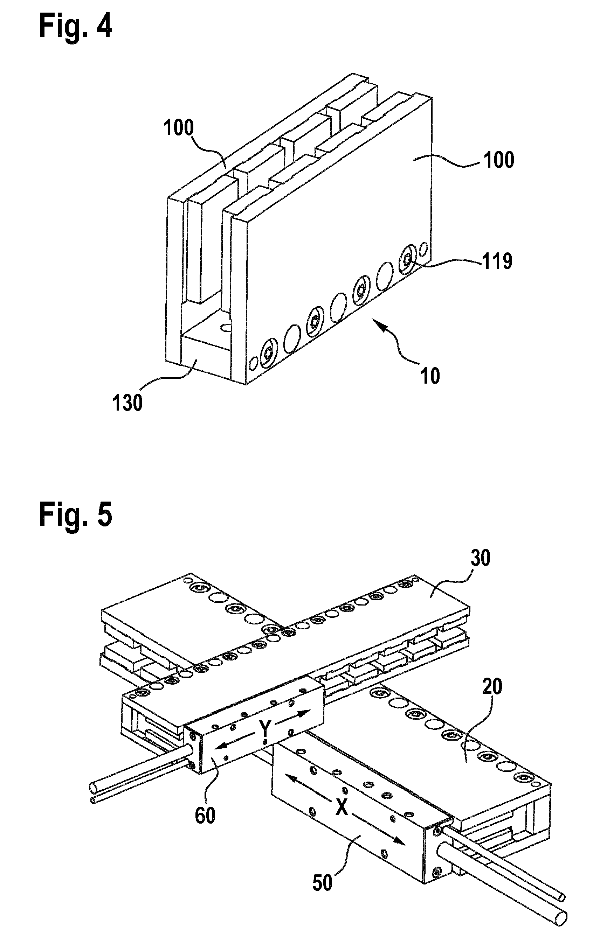

Furthermore, the plate 110 provides perforations or respectively boreholes 116, 117, 118, which serve to attach the plate 110 to other components, especially of a corresponding plate disposed opposite and a transverse carrier 130 disposed between them (see Fig. 4), in order to form a secondary part 10. For this purpose, the transverse carrier 130 can comprise threaded boreholes, into which screws 119 can be screwed through the perforations 117. Pins for the alignment of the transverse carrier 130 can be accommodated in the perforations 116. The boreholes 116 can be embodied as threaded boreholes in order to allow an attachment of the secondary part to others, especially to a frame, stand or similar.

The form-fit elements in Fig. 1 are embodied as longitudinal webs 114 and transverse webs 112, 113, wherein `longitudinal' and 'transverse' refer to the direction of movement of a primary part 50, 60 (see Fig. 5). The transverse webs 112, 113 are spaced at a defined polar spacing distance tₘ, wherein the transverse webs 113 are disposed within the plate 110, and the transverse webs 112 are disposed at the edge of the plate 110. Accordingly, the transverse webs 112 comprise half the width of the transverse webs 113 in the movement direction, so that plates 110 lined up next to one another, in which two transverse webs 112 come to be arranged side-by-side, comprise the polar spacing distance tₘ over the entire length.

Permanent-magnet elements 120, 125 are arranged on the surface 111 of the plate 110, wherein the form-fit elements 112, 113, 114 prevent a slipping of the permanent-magnet elements in the main plane of extension (that is, on the surface 111). Perpendicular to the main plane of extension (that is, in Fig. 1, upwards), the permanent-magnet elements are held on the plate 110 by their intrinsic magnetic force. In the Fig., the main direction of the magnetic force F therefore extends parallel to a vertical, as shown in Fig. 1, at the top.

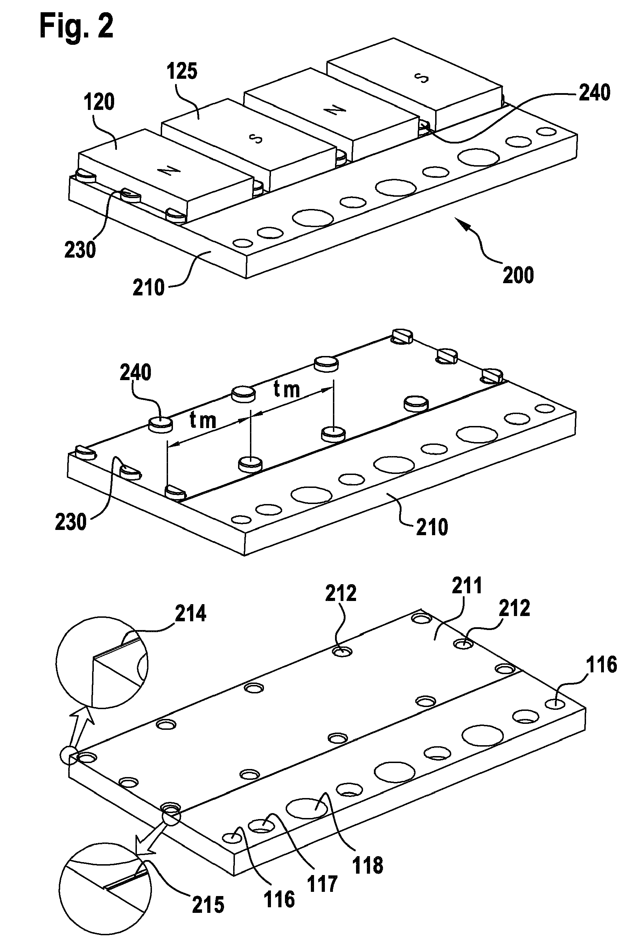

Fig. 2 differs from Fig. 1 through a different embodiment of the carrier.

At the top and in the centre of Fig. 2, a secondary-part element 200 is, once again, illustrated in perspective from two different directions. The secondary-part element 200 comprises a carrier 210 and a number of permanent-magnet elements 120, 125.

In Fig. 2 at the bottom, a preferred embodiment of the carrier 210 is illustrated. The carrier 210 is embodied as a plate made from a magnetically soft material, such as an FeNi alloy. The plate 210 comprises a flat surface 211 with boreholes 212 for the accommodation of pins 230, 240 and with webs 214, 215, in each case, as form-fit elements. Furthermore, the plate 210 also provides the already known boreholes 116, 117, 118.

The form-fit elements in Fig. 2 are embodied along the movement direction as round pins 240 and half-round pins 230, and transversely to the movement direction as web 214, 215. The pins 230, 240 can, for example, be screwed, pressed, or plugged into the boreholes 212.

The pins 230, 240 are spaced at the defined polar spacing distance tₘ, wherein the round pins 240 are disposed within the plate 210 and the half-round pins 230 are disposed at the edge of the plate 210. Accordingly, the half-round pins 230 provide half the width of the round pins 240 in the movement direction, so that plates 210 lined up with one another, in which two half-round pins 230 come to be arranged side-by-side, comprise the polar spacing distance tₘ over the entire length.

The permanent-magnet elements 120, 125 are arranged on the surface 211 of the plate 210, wherein the form-fit elements 230, 240, 214, 215 prevent a slipping of the permanent-magnet elements in the main plane of extension (that is, on the surface 211). Perpendicular to the main plane of extension (that is, upwards in Fig. 1), the permanent-magnet elements are held on the plate 210 through their intrinsic magnetic force.

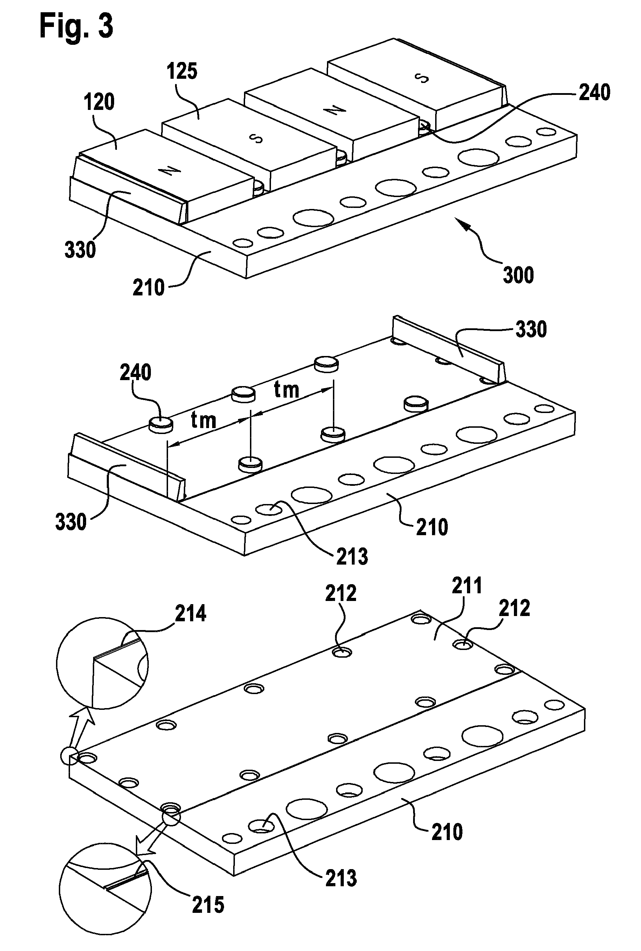

The secondary-part element 300 according to Fig. 3 differs from the secondary-part element 200 according to Fig. 2 only through the embodiment of the form-fit elements at the edge of the plate 210. In Fig. 3, instead of the half-round pins 230, edge pieces 330 are inserted into the boreholes 212, wherein each edge piece uses more than one borehole 212 for the attachment, in the present example, three boreholes. The extension of the edge pieces 330 in the movement direction is also only half the size of the extension of the round pins 240.

As already mentioned, Fig. 4 shows the secondary part 10 in which two secondary-part elements 100 are screwed to a transverse carrier 130 by means of screws 119.

Fig. 5 shows an arrangement of two preferred linear motors in order to perform a movement in X-direction and Y-direction. Each linear motor provides a preferred embodiment of a secondary part 20 or respectively 30 according to the invention and a primary part 50 or respectively 60 movable relative to it.

## Patentansprüche

1. A secondary part (10, 20, 30) of a linear motor, with a carrier (110, 210) and a permanent magnet (120, 125) arranged thereon,
wherein the carrier (110, 210) is ferromagnetic, so that a magnetic force acts between the carrier (110, 210) and the permanent magnet (120, 125) arranged thereon,
wherein the carrier (110, 210) and the permanent magnet (120, 125) arranged thereon are embodied in such a manner that the magnetic force (F) is at least greater than the gravitational force on the permanent magnet (120, 125),
wherein the carrier (110, 210) and the permanent magnet (120, 125) arranged thereon are embodied in such a manner that a movement of the permanent magnet (120, 125) in at least one direction perpendicular to the main direction of the magnetic force (F) is restricted by form fit.

2. The secondary part (10, 20, 30) according to claim 1, wherein the carrier (110, 210) and the permanent magnet (120, 125) arranged thereon are embodied in such a manner that a movement of the permanent magnet (120, 125) is restricted in every direction perpendicular to the main direction of the magnetic force (F) by form fit.

3. The secondary part (10, 20, 30) according to claim 1 or 2, wherein the carrier (110, 210) comprises at least one form-fit element (111, 112, 113, 114; 214, 215, 230, 240; 330) which restricts the movement of the permanent magnet (120, 125) in the at least one direction perpendicular to the main direction of the magnetic force (F) through form fit.

4. The secondary part (10, 20, 30) according to claim 3,
wherein the at least one form-fit element (111, 112, 113, 114; 214, 215, 230, 240; 330) is detachable from the carrier (110, 210) in a non-destructive manner, or is connected to the carrier (110, 210) in a only destructively detachable manner.

5. The secondary part (10, 20, 30) according to claim 3 or 4, wherein the at least one form-fit element (111, 112, 113, 114; 214, 215, 230, 240; 330) is arranged in a borehole (212) of the carrier (110, 210).

6. The secondary part (10, 20, 30) according to any one of claims 3 to 5, wherein the at least one form-fit element (111, 112, 113, 114; 214, 215, 230, 240; 330) is connected to the carrier (110, 210) by means of at least one connection, which is selected from a plug connection, a clip connection, a screw connection, a riveted connection, a glued connection, a welded connection and a soldered connection.

7. The secondary part (10, 20, 30) according to any one of claims 3 to 5, wherein the at least one form-fit element (111, 112, 113, 114; 214, 215, 230, 240; 330) is embodied in one piece with the carrier (110, 210).

8. The secondary part (10, 20, 30) according to any one of the preceding claims, wherein no material-fit connection exists between the permanent magnet (120, 125) and the carrier (110, 210).

9. The secondary part (10, 20, 30) according to any one of the preceding claims, wherein no form-fit connection exists between the permanent magnet (120, 125) and the carrier (110, 210) which restricts movement of the permanent magnet (120, 125) parallel to the main direction (F) of the magnetic force.

10. The secondary part (10, 20, 30) according to any one of the preceding claims, which comprises two carriers (110, 210) connected by a transverse carrier (130).

11. A linear motor with a secondary part (10, 20, 30) according to any one of the preceding claims and an electromagnetically excited primary part (50, 60) movable relative to the former.

12. The linear motor according to claim 11, wherein the carrier (110, 210) and the permanent magnet (120, 125) arranged thereon are embodied in such a manner that the magnetic force (F) is greater than a magnetic force between the primary part and the permanent magnet (120, 125).

13. The linear motor according to claim 12, wherein the carrier (110, 210) and the permanent magnet (120, 125) arranged thereon are embodied in such a manner that the magnetic force (F) is greater than the sum of the gravitational force on the permanent magnet (120, 125) and the magnetic force between the primary part and the permanent magnet (120, 125).

14. The linear motor according to any one of claims 11 to 13, wherein the primary part (50, 60) comprises an iron-free electromagnet.

15. A method for manufacture of a secondary part (10, 20, 30), in particular, according to any one of claims 1 to 10, of a linear motor,
wherein a ferromagnetic carrier (110, 210) is provided,
wherein a permanent magnet (120, 125) is attached to the carrier (110, 210) by means of magnetic force.
